# FASCICULE DE BREVET EUROPEEN

(11) **EP 2 651 727 B1**
(45) Date de publication et mention de la délivrance du brevet: **21.06.2017**
(21) Numéro de dépôt: 11793838.1
(22) Date de dépôt: 13.12.2011
(51) Int. Cl.: B60T 11/16, B60T 11/20, B60T 11/236, F16J 15/32

(54) **MAITRE-CYLINDRE DE SYSTEME DE FREINS DE VEHICULES AUTOMOBILES A JOINT ANTI-RETOURNEMENT ET JOINT POUR UN TEL MAITRE-CYLINDRE.**
MASTERZYLINDER FÜR DAS BREMSSYSTEM EINES KRAFTFAHRZEUGS MIT RÜCKSCHLAGDICHTUNG UND DICHTUNG FÜR EINEN DERARTIGEN MASTERZYLINDER
MOTOR VEHICLE BRAKING SYSTEM MASTER CYLINDER WITH NON-RETURN SEAL AND SEAL FOR SUCH A MASTER CYLINDER

(30) Priorité: 17.12.2010 FR 1004951
(43) Date de publication de la demande: 23.10.2013
(73) Titulaire: Robert Bosch GmbH, 70442 Stuttgart (DE)
(72) Inventeur: GRECH, Daniel, F-60260 Lamorlaye (FR); QUINIOU, Nicolas, F-93250 Villemongle (FR); LHUILLIER, Laurent, F-93150 Le Blanc Mesnil (FR); AUGUSTE, Antony, F-94350 Villier Sur Marne (FR); CHARPENTIER, Carole, F-95160 Montmorency (FR)
(86) Numéro de dépôt international: PCT/EP2011/072614
(87) Numéro de publication internationale: WO 2012/080253

(56) Documents cités:
- EP-A1- 0 002 149
- EP-A1- 1 435 315
- EP-A1- 1 462 688
- EP-A1- 1 995 138
- EP-A1- 2 077 214
- WO-A2-03/006284
- DE-A1- 4 241 205
- DE-A1- 19 754 700
- DE-U1- 7 900 776
- US-A- 3 829 104
- US-B1- 6 290 235

## Description

### Domaine de l'invention

La présente invention concerne un maître-cylindre de système de freins de véhicules automobiles ayant un corps muni d'un alésage logeant au moins un piston actionné par le conducteur entre une position arrière de repos et une position avant de freinage et rappelé élastiquement vers sa position de repos,
- l'alésage ayant au moins une chambre d'alimentation reliée au réservoir de liquide de frein,
- le piston formant un tiroir séparant la chambre d'alimentation reliée au réservoir de liquide de frein et une chambre de pression reliée aux circuits de freins,
- la chambre d'alimentation étant bordée par deux gorges recevant l'une un joint de réalimentation séparant la chambre d'alimentation de la chambre de pression et l'autre, un joint d'étanchéité séparant la chambre d'alimentation et l'extérieur, par rapport à la surface du piston,
- le joint d'étanchéité est un joint périphérique à section en forme de U, couché, dont une branche est appliquée contre le fond de la gorge et ses deux parois adjacentes, l'autre branche assurant l'étanchéité en s'appuyant sur le piston.

La présente invention concerne également un joint pour un tel maître-cylindre.

### Etat de la technique

On connaît des maîtres-cylindres tels que définis ci-dessus dans lesquels le joint d'étanchéité également appelé coupelle d'étanchéité peut se retourner dans sa gorge dans des conditions extrêmes de friction appliquées au piston lors que le maître-cylindre est en position isolatrice ou séparatrice.

Il arrive également que pour des raisons de friction le joint se retourne au moment de l'assemblage du maître-cylindre. De tels maître cylindres sont décrits dans le document EP 1995 138 A1.

Dans le cas d'un maître-cylindre simple, il n'y a qu'une chambre d'alimentation bordée par le joint de réalimentation et le joint d'étanchéité, le premier étant placé derrière le second dans le sens de déplacement du piston du maître-cylindre sous l'effet d'une action sur la pédale de frein. Dans le cas d'un maître-cylindre tandem, il y a deux pistons fonctionnant de façon combinée et chaque piston coopère avec une chambre d'alimentation et une chambre de pression.

Le risque de retournement soit au montage soit dans des situations d'extrême existe alors pour les deux joints d'étanchéité.

### But de l'invention

La présente invention a pour but de développer un maître-cylindre de système de freins évitant le retournement du ou des joints d'étanchéité tant à l'assemblage que dans des conditions extrêmes auxquelles le maître-cylindre pourrait être exposé, en position isolatrice ou séparatrice.

### Exposé et avantages de l'invention

A cet effet, la présente invention concerne un maître-cylindre tel que défini ci-dessus caractérisé en ce que l'extrémité d'au moins l'une des deux branches du joint a une surface plane destinée à s'appliquer contre le côté de la gorge.

Cette surface plane de l'extrémité de chacune des branches permet aux deux branches et surtout à la branche extérieure située près du fond de la gorge de s'appliquer fermement contre la surface du côté de la gorge en s'opposant à l'appui de la base de la section en U contre la face opposée de la gorge. Ainsi, la branche extérieure de la section en U s'arcboute dans la gorge et ne risque pas de riper d'abord par la branche du fond, qui du fait de ce ripage risquerait de refermer la forme de U et de décoller partiellement la base, favorisant encore plus le ripage sous l'effet d'un frottement violent exercé par le mouvement du piston sur la branche intérieure de ce joint.

L'effet de blocage du joint dans sa gorge est encore amélioré si les faces planes ou tronconiques des deux branches des joints et en particulier la face plane située au fond de la gorge est en position de repos, inclinée d'un angle faible par rapport à la surface de la paroi correspondante. Cet angle faible peut être de l'ordre de 10°.

Ainsi au fur et à mesure que les efforts de friction s'accentuent, exercés sur la branche intérieure de la forme de U, la surface de la branche extérieure s'appuie de plus en plus fermement contre la face de la gorge et bloque toute amorce de ripage et par suite de basculement ou de roulement de cette section en U à l'intérieur de la gorge.

Suivant une autre caractéristique de l'invention, l'extrémité plane d'au moins l'une des branches du joint est une surface inclinée tronconique par rapport à la direction axiale xx lorsque le joint est en position neutre, logé dans la gorge.

Et en particulier dans le cas d'une surface inclinée, l'inclinaison est un angle compris entre 0° et 10° par rapport à un plan perpendiculaire à l'axe xx de l'alésage.

Le cas extrême correspondant à une inclinaison nulle est celui d'une surface réellement plane alors que le cas d'une inclinaison de 10° correspond à une surface conique au sens mathématique du terme.

Suivant une autre caractéristique avantageuse, l'extrémité d'au moins l'une des branches du joint d'étanchéité est constituée par des parties en saillie réparties en périphérie et ayant chacune une surface plane ou quasi-plane.

Dans ce cas, la surface inclinée peut être inclinée d'un angle compris entre 0° et 10° par rapport à un plan perpendiculaire à l'axe de l'alésage.

L'invention concerne également un joint pour un maître-cylindre soit comme joint installé dans le maître-cylindre au moment de l'assemblage de celui-ci soit comme pièce de rechange pour un tel maître-cylindre.

Ainsi, l'invention concerne un joint d'étanchéité périphérique à section en U couché pour un maître-cylindre de système de freins de véhicules automobiles ayant un corps muni d'un alésage logeant au moins un piston actionné par le conducteur entre une position arrière de repos et une position avant de freinage et rappelé élastiquement vers sa position de repos,
- l'alésage ayant au moins une chambre d'alimentation reliée au réservoir de liquide de frein,
- le piston formant un tiroir séparant la chambre d'alimentation reliée au réservoir de liquide de frein et une chambre de pression reliée aux circuits de freins,
- la chambre d'alimentation étant bordée par deux gorges recevant l'une un joint de réalimentation séparant la chambre d'alimentation de la chambre de pression et l'autre, un joint d'étanchéité séparant la chambre d'alimentation et l'extérieur, par rapport à la surface du piston,
- le joint d'étanchéité est un joint périphérique à section en forme de U, couché, dont une branche est appliquée contre le fond de la gorge et ses deux parois adjacentes, l'autre branche assurant l'étanchéité en s'appuyant sur le piston,
caractérisé en ce que l'extrémité d'au moins l'une des deux branches du joint a une surface plane destinée à s'appliquer contre le côté de la gorge.

Suivant une autre caractéristique, l'extrémité plane d'au moins l'une des branches du joint est une surface inclinée tronconique par rapport à la direction axiale xx lorsque le joint est en position neutre logé dans la gorge.

Suivant une autre caractéristique, la surface inclinée est inclinée d'un angle α compris entre 0° et 10° par rapport à un plan perpendiculaire à l'axe xx de l'alésage (120).

Suivant une autre caractéristique, l'extrémité d'au moins l'une des branches du joint d'étanchéité est constituée par des parties en saillie réparties en périphérie et ayant chacune une surface plane ou quasi-plane.

### Dessins

La présente invention sera décrite ci-après de manière plus détaillée à l'aide des dessins annexés dans lesquels :
- la figure 1 est une vue en coupe axiale d'un maître-cylindre tandem selon l'invention,
- la figure 2 est une vue en coupe à échelle agrandie du joint placé dans une gorge du corps du maître-cylindre débouchant dans l'alésage,
- la figure 3 montre la forme de l'extrémité d'une branche de la forme en U de la section du joint d'étanchéité,
- la figure 4 est une vue en perspective d'un autre mode de réalisation du joint,
- la figure 5 est une vue à échelle agrandie du joint de la figure 4, placé dans son logement,
- la figure 6 est une vue de détail montrant la forme de l'extrémité d'une branche en U du joint de la figure 4,
- la figure 7 montre dans ses parties 7A-7E cinq étapes de la déformation d'un joint d'étanchéité selon l'invention en position installée, lorsque le maître-cylindre est soumis à un effort de friction extrême exercé entre le piston du maître-cylindre et le joint,
- la figure 8 montre à titre de comparaison dans ses parties 8A-8F le mouvement de retournement d'un joint connu sous l'effet d'un effort de friction extrême exercé par le piston sur le joint.

### Description d'un mode de réalisation de l'invention

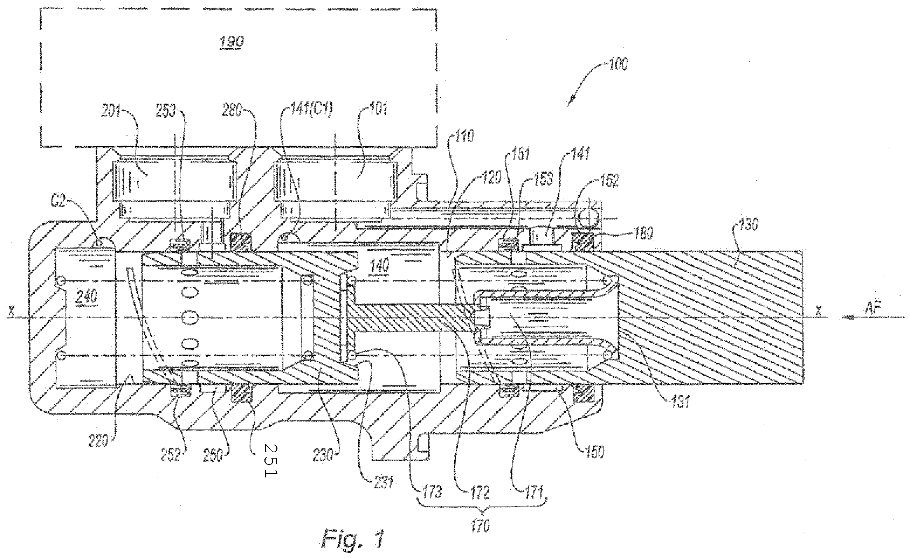

Selon la figure 1, l'invention concerne un maître-cylindre 100 d'un système de freins. L'exemple présenté est celui d'un maître-cylindre tandem.

Le maître-cylindre sera décrit ci-après dans son expression de maître-cylindre simple, sachant que cette description s'applique pratiquement de façon dédoublée au maître-cylindre tandem pour tous les éléments qui constituent le dédoublement et permettent la commande de deux circuits de freins indépendants.

Le maître-cylindre se compose d'un corps 110 traversé par un alésage 120 d'axe (xx) recevant un piston 130 destiné à être commandé soit par un servo-frein non représenté soit directement par l'action exercée par la pédale de frein sur le maître-cylindre. Dans le cas d'une pédale de frein assistée d'un servofrein, il peut être prévu un simulateur commandé par un actionneur. Le simulateur d'une part commande le maître-cylindre et d'autre part crée une réaction simulant la transmission directe de l'action de la pédale de frein sur le frein.

Le sens de déplacement du piston 130 est indiqué par la flèche AF qui correspond à une action de freinage allant, selon la figure 1, de la droite vers la gauche. Les parties dédoublées du maître-cylindre situé à gauche seront appelées les « parties côté avant » et les parties situées de l'autre côté seront appelées les « parties côté arrière ».

Le dessus du maître-cylindre est muni de deux entrées 101, 201 destinées à recevoir les embouts de sortie du réservoir de liquide de frein simplement esquissé.

Le piston 130 formant tiroir délimite dans l'alésage 120 une chambre de pression 140 reliée au circuit de frein C1 par un perçage 141 débouchant dans la chambre 140. Cette chambre de pression 140 est séparée par le piston 130 creux, d'une chambre d'alimentation 150 réalisée dans le corps 110 du maître-cylindre 100 et entre son alésage 120 et la surface extérieure du piston 130, matérialisée par une gorge périphérique dans l'alésage. Du côté avant et du côté arrière, cette chambre d'alimentation 150 est bordée d'une gorge périphérique 151, 152 débouchant dans l'alésage. La gorge avant 151 reçoit un joint périphérique de réalimentation 153 et la gorge arrière 152 un joint périphérique d'étanchéité 180 encore appelé joint d'isolation.

Le joint de réalimentation 153 a pour fonction de permettre l'alimentation en liquide de frein de la chambre de pression 140 en cas de manque de liquide de frein ou d'un actionnement brusque des freins. Le mouvement d'ouverture et de fermeture de ce joint de réalimentation 153 est décrit dans le document FR 2 916 405. Le joint d'étanchéité 180 qui sépare la chambre d'alimentation 150 de l'extérieur du maître-cylindre 100 a pour fonction d'assurer, quelles que soient les circonstances, l'étanchéité entre l'alésage 120 et la surface du piston 130. Ce joint 180 doit résister aux efforts importants auxquels peut être soumis ensemble alésage 120/boîtier 110/piston 130. De ce fait, le joint 180 frotte sur la surface extérieure du piston 130 et cette surface de contact du joint avec le piston peut être soumise à des forces de frottement très importantes qui ne doivent en aucun cas entraîner le joint 180 et le faire se retourner progressivement.

La description du maître-cylindre 100, donnée ci-dessus est aussi celle d'un maître-cylindre simple. Dans le cas du maître-cylindre tandem 100 représenté, il y a un dédoublement des moyens de mise en pression des deux circuits de freins C1, C2. Dans ce cas, la partie décrite ci-dessus est la partie primaire du maître-cylindre tandem et l'autre partie est la partie secondaire. La description donnée ci-dessus s'applique dans les mêmes conditions pour les éléments concernés par l'invention et qui portent les mêmes références augmentées de 100.

Les deux pistons 130, 230 sont reliés par une tige télescopique 170 formée de deux parties 171, 172 maintenues écartées par un ressort 173 et s'appliquant par les deux extrémités, l'une contre le fond 131 du piston 130 et l'autre contre le dessus 231 du piston 230.

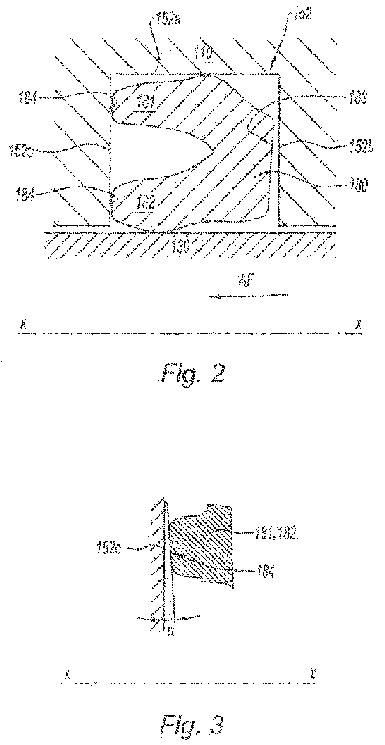

La figure 2 est une vue en coupe du joint d'étanchéité 180 logé dans sa gorge périphérique 152 et prenant appui contre le piston 130. Cette gorge 152 a une section carrée ou rectangulaire avec un fond 152a et deux côtés 152b, 152c dirigés radialement par rapport à l'axe (xx). Le joint 180 a une section en forme de U couché à deux branches 181, 182, une branche extérieure 181 par rapport à l'axe (xx) du piston, cette branche extérieure 181 venant en fait au fond 152a de la gorge, et une branche intérieure 182 par rapport à l'axe xx, et venant s'appuyer contre la surface extérieure du piston 130. Les deux branches 181, 182 sont réunies et forment une base 183 qui s'appuie contre le côté 152b situé dans le sens de poussée AF du piston.

La surface plane de l'extrémité de l'une ou des deux branches du joint est dite plane par abus de langage. Le côté de la gorge 152c est situé dans un plan perpendiculaire à l'axe xx et la surface dite plane de l'extrémité de l'une ou des deux branches s'aplatit contre ce côté 152c de la gorge. Cette surface peut être plane au sens strict, c'est-à-dire contenue dans un plan perpendiculaire à l'axe xx. Mais elle peut également être quasi-plane ou « inclinée » par rapport à un tel plan. En fait lorsqu'elle est inclinée par rapport à la face correspondante de la gorge elle correspond à une surface tronconique d'axe xx, avec un angle au sommet très grand ou son complément très petit, de l'ordre de 0-10°. La surface plane est alors réellement plane lorsque l'angle au sommet est égal à 180° ou son complément égal à 0°.

La figure 3 montre le détail de la face avant 184 de chacune des branches 181, 182. La section de cette face avant 184 représentée en coupe axiale a une inclination d'un angle α par exemple de l'ordre de 10° par rapport au côté 152c de la gorge 152 contre lequel cette surface 184 est destinée à s'appliquer et à s'accrocher avec le moins de glissement possible.

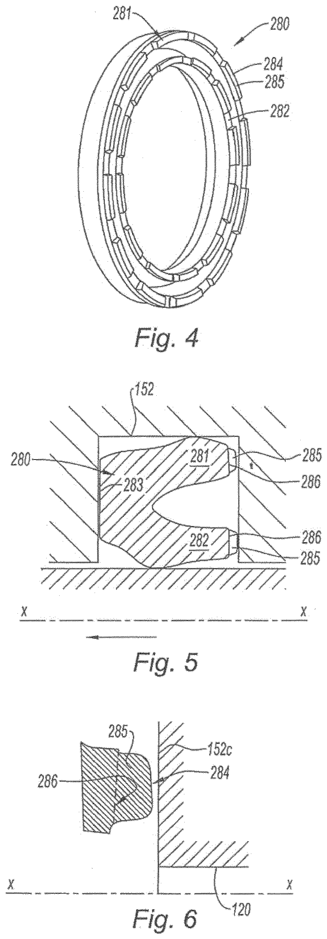

La figure 4 montre une variante de réalisation du joint d'étanchéité 280 à section en U dont les extrémités des branches 281, 282 sont munies de plots 285 répartis régulièrement sur la périphérie ce chaque branche, pour former un profil crénelé. Les faces 284 des parties en saillie 285 sont planes au sens déjà défini ci-dessus, c'est-à-dire contenues dans un plan perpendiculaire à l'axe xx de l'alésage ou faisant un léger angle avec ce plan et se présentant alors sous la forme d'une surface conique à angle au sommet très grand. Le fond en retrait entre les parties saillies 285 portent la référence 286.

La figure 5 montre l'installation du joint dans la gorge 152 et la figure 6 montre schématiquement la disposition d'une face avant « plane » ou quasi-plane 284 par rapport au côté 152 de la gorge 150.

Le joint selon l'invention est, par exemple, réalisé en EPDM d'une dureté Shore A de 70.

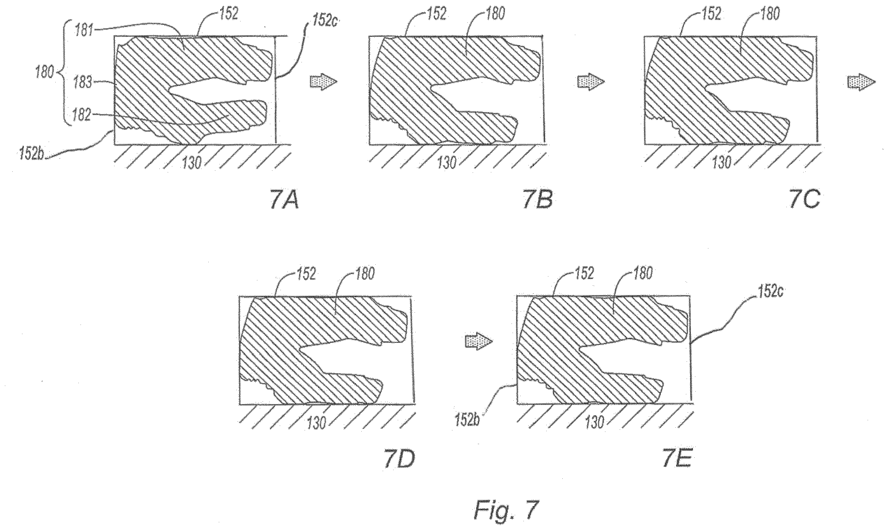

La figure 7 dans ses parties 7A-7E montre la déformation d'un joint 180 selon l'invention tel que celui décrit ci-dessus sous l'effet d'un effort violent engendrant une friction importante.

A la partie 7A, le joint est au repos. Sa branche extérieure 181 s'appuie contre le côté 152c de la gorge, de même que sa base 183 contre le côté 152b. La branche extérieure 181 s'appuie également en périphérie contre le fond 152a de la gorge 152.

Sous l'effet d'un mouvement brusque dans la direction de la droite vers la gauche (figure 7B) exercé par le piston 130 sur la branche intérieure 182, celle-ci recule dans une certaine mesure et comprime la partie correspondante de la branche 182 et le cas échéant de la base 183. Cet effort peut se poursuivre avec une plus forte compression de la branche intérieure 182 en direction du côté 152b (figures 7B, 7C).

L'étape de la figure 7D montre une situation encore plus poussée pour finalement atteindre la situation de ripage extrême mais sans retournement, à la partie 7E.

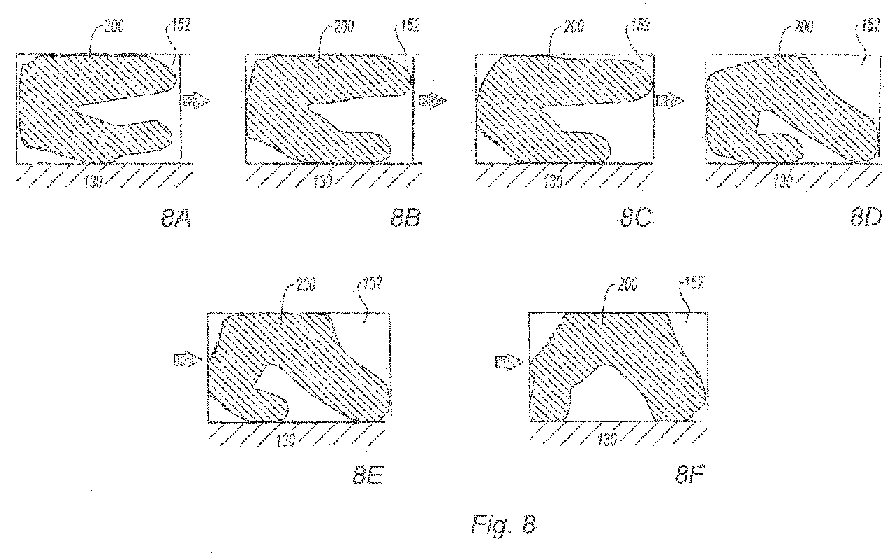

La figure 8 montre à titre de comparaison dans ses parties 8A-8F la déformation d'un joint classique 200 sous l'effet d'un frottement violent du joint 200 contre le piston 130 provoquant le glissement progressif du joint le long des parois de la gorge 152 pour aboutir finalement au retournement du joint 200, position dans laquelle le joint n'assure plus sa fonction de joint (partie 8F).

### NOMENCLATURE

- 10: Maître-cylindre
- 101, 201: Entrées du maître-cylindre
- 110: Corps du maître-cylindre
- 120: Alésage
- 130, 230: Piston
- 131: Fond du piston
- 140, 240: Chambre de pression
- 141: Perçage
- 150, 250: Chambre d'alimentation
- 151, 152 ; 251, 252: Gorges
- 152a: Fond
- 152b, 152c: Parois
- 153, 253: Joint de réalimentation
- 170: Tige télescopique
- 171, 172: Parties de la tige
- 173: Ressort
- 180, 280: Joint d'étanchéité selon l'invention
- 181, 182 ; 281, 282: Branches
- 183: Base
- 184: Extrémité
- 190: Réservoir
- 200: Joint classique
- 231: Dessus du piston
- 284: Surface plane
- 285: Parties en saillie
- 286: Fond entre les parties 285
- C1, C2: Circuits de freins

## Revendications

1. Maître-cylindre (100) de système de freins de véhicules automobiles ayant un corps (110) muni d'un alésage (120) logeant au moins un piston (130, 230) actionné par le conducteur entre une position arrière de repos et une position de freinage et rappelé élastiquement vers sa position de repos,
- l'alésage (120) ayant au moins une chambre d'alimentation (150, 250) reliée au réservoir de liquide de frein (190),
- le piston (130, 230) formant un tiroir séparant la chambre (150, 250) d'alimentation reliée au réservoir de liquide de frein (190) et une chambre de pression (140, 240) reliée aux circuits de freins (C1, C2),
- la chambre d'alimentation (150, 250) étant bordée par deux gorges (151, 152 ; 251, 252) recevant l'une (151, 251), un joint de réalimentation (153, 253) séparant la chambre d'alimentation de la chambre de pression et l'autre (152, 252), un joint d'étanchéité (180, 280) séparant la chambre d'alimentation et l'extérieur, par rapport à la surface du piston (130),
- le joint d'étanchéité (180, 280) est un joint périphérique à section en forme de U, couché, dont une branche (181) (branche extérieure) est appliquée contre le fond (152a) de la gorge (152, 252) et ses deux parois adjacentes (152b, 152c), l'autre branche (182 (branche intérieure) assurant l'étanchéité en s'appuyant sur le piston (130),
**caractérisé en ce que**
l'extrémité (184) d'au moins la branche extérieure (181) du joint d'étanchéité (180) a une surface plane destinée à s'appliquer contre le côté (152c) de la gorge (152, 252) et que la surface plane (184) est inclinée d'un angle (α) compris entre 0° et 10° par rapport à un plan perpendiculaire à l'axe (xx) de l'alésage (120).

2. Maître-cylindre selon la revendication 1,
**caractérisé en ce que**
l'extrémité plane (184) d'au moins l'une des branches (181, 182) du joint (180) est une surface inclinée tronconique par rapport à la direction axiale (xx) lorsque le joint est en position neutre, logé dans la gorge (152).

3. Maître-cylindre selon la revendication 1,
**caractérisé en ce que**
l'extrémité d'au moins l'une des branches (281, 282) du joint d'étanchéité (280) est constituée par des parties en saillie (285) réparties en périphérie et ayant chacune une surface plane ou quasi-plane (284).

4. Maître-cylindre selon la revendication 3,
**caractérisé en ce que**
la surface inclinée (284) des parties en saillie (285) est inclinée d'un angle (α) compris entre 0° et 10° par rapport à un plan perpendiculaire à l'axe (xx) de l'alésage (120).

5. Joint d'étanchéité périphérique à section en U couché pour un maître-cylindre (10) de système de freins de véhicules automobiles ayant un corps (12) muni d'un alésage (14) logeant au moins un piston (16, 18) actionné par le conducteur entre une position arrière de repos et une position avant de freinage et rappelé élastiquement vers sa position de repos,
- l'alésage ayant au moins une chambre d'alimentation reliée au réservoir de liquide de frein,
- le piston (130, 230) formant un tiroir séparant la chambre (150, 250) d'alimentation reliée au réservoir de liquide de frein (170) et une chambre de pression (140, 240) reliée aux circuits de freins (C1, C2),
- la chambre d'alimentation (150, 250) étant bordée par deux gorges (151, 152 ; 251, 252) recevant l'une (151, 252), un joint de réalimentation (153, 253) séparant la chambre d'alimentation de la chambre de pression et l'autre (152, 252), un joint d'étanchéité (180, 280) séparant la chambre d'alimentation et l'extérieur, par rapport à la surface du piston (130),
- le joint d'étanchéité (180, 280) est un joint périphérique à section en forme de U, couché, dont une branche (181) (branche extérieure) est appliquée contre le fond (152a) de la gorge (152, 252) et ses deux parois adjacentes (152b, 152c), l'autre branche (182 (branche intérieure) assurant l'étanchéité en s'appuyant sur le piston (130),
**caractérisé en ce que**
- l'extrémité (184) d'au moins la branche extérieure (181) du joint d'étanchéité (180) a une surface plane destinée à s'appliquer contre le côté (152c) de la gorge (152, 252) et que la surface plane (184) est inclinée d'un angle (α) compris entre 0° et 10° par rapport à un plan perpendiculaire à l'axe (xx) de l'alésage (120).

6. Joint selon la revendication 5,
**caractérisé en ce que**
l'extrémité plane (184) d'au moins l'une des branches (181, 182) du joint (180) est une surface inclinée tronconique par rapport à la direction axiale (xx) lorsque le joint est en position neutre logé dans la gorge (152).

7. Joint selon la revendication 5,
**caractérisé en ce que**
l'extrémité d'au moins l'une des branches (281, 282) du joint d'étanchéité (280) est constituée par des parties en saillie (285) réparties en périphérie et ayant chacune une surface plane ou quasi-plane (284).

## Patentansprüche

1. Hauptbremszylinder (100) für Kraftfahrzeuge, welcher einen Körper (110) besitzt, der mit einer Bohrung (120) versehen ist, in welcher zumindest ein Kolben (130, 230) ruht, welcher von dem Fahrer zwischen einer hinteren Ruheposition und einer Bremsposition betätigt wird und elastisch in Richtung auf seine Ruheposition zurückgestellt wird,
- wobei die Bohrung (120) zumindest eine Versorgungskammer (150, 250) besitzt, welche mit dem Bremsflüssigkeitstank (190) verbunden ist,
- wobei der Kolben (130, 230) einen Schieber bildet, welcher die mit dem Bremsflüssigkeitstank (190) verbundene Versorgungskammer (150, 250) und eine mit den Bremskreisen (C1, C2) verbundene Druckkammer (140, 240) trennt,
- wobei die Versorgungskammer (150, 250) von zwei Nuten (151, 152; 251, 252) gesäumt wird, von denen die eine (151, 251) eine Überströmdichtung (153, 253) aufnimmt, welche die Versorgungskammer von der Druckkammer trennt, und die andere (152, 252) eine Dichtung (180, 280) aufnimmt, welche die Versorgungskammer und den Außenbereich in Bezug auf die Kolbenfläche (130) trennt,
- wobei die Dichtung (180, 280) eine umlaufende Dichtung mit einem liegenden, U-förmigen Querschnitt ist, dessen einer Zweig (181) (äußerer Zweig) gegen den Boden (152a) der Nut (152, 252) und deren beide benachbarten Wände (152b, 152c) angelegt ist, wobei der andere Zweig (182) (innerer Zweig) die Dichtigkeit gewährleistet, indem er sich an dem Kolben (130) abstützt,
**dadurch gekennzeichnet, dass**
das Ende (184) von zumindest dem äußeren Zweig (181) der Dichtung (180) eine ebene Fläche besitzt, welche dafür vorgesehen ist, an der Seite (152c) der Nut (152, 252) anzuliegen, und dass die ebene Fläche (184) um einen Winkel (α) geneigt ist, welcher zwischen 0° und 10° in Bezug auf eine Ebene senkrecht zur Achse (xx) der Bohrung (120) liegt.

2. Hauptzylinder nach Anspruch 1,
**dadurch gekennzeichnet, dass**
das ebene Ende (184) von zumindest dem einen der Zweige (181, 182) der Dichtung (180) eine geneigte, kegelstumpfförmige Fläche in Bezug auf die axiale Richtung (xx) ist, wenn die Dichtung sich in neutraler Position befindet und in der Nut (152) ruht.

3. Hauptzylinder nach Anspruch 1,
**dadurch gekennzeichnet, dass**
das Ende von zumindest dem einen der Zweige (281, 282) der Dichtung (280) von vorspringenden Abschnitten (285) gebildet wird, welche über den Umfang verteilt sind und jeweils eine ebene oder quasi-ebene Fläche (284) besitzen.

4. Hauptzylinder nach Anspruch 3,
**dadurch gekennzeichnet, dass**
die geneigte Fläche (284) der vorspringenden Abschnitte (285) um einen Winkel (α) geneigt ist, welcher zwischen 0° und 10° in Bezug auf eine Ebene senkrecht zur Achse (xx) der Bohrung (120) liegt.

5. Umlaufende Dichtung mit einem liegenden, U-förmigen Querschnitt für einen Hauptbremszylinder (10) für Kraftfahrzeuge, welcher einen Körper (12) besitzt, der mit einer Bohrung (14) versehen ist, in welcher zumindest ein Kolben (16, 18) ruht, welcher von dem Fahrer zwischen einer hinteren Ruheposition und einer vorderen Bremsposition betätigt wird und elastisch in Richtung auf seine Ruheposition zurückgestellt wird,
- wobei die Bohrung zumindest eine Versorgungskammer besitzt, welche mit dem Bremsflüssigkeitstank verbunden ist,
- wobei der Kolben (130, 230) einen Schieber bildet, welcher die mit dem Bremsflüssigkeitstank (170) verbundene Versorgungskammer (150, 250) und eine mit den Bremskreisen (C1, C2) verbundene Druckkammer (140, 240) trennt,
- wobei die Versorgungskammer (150, 250) von zwei Nuten (151, 152; 251, 252) gesäumt wird, von denen die eine (151, 252) eine Überströmdichtung (153, 253) aufnimmt, welche die Versorgungskammer von der Druckkammer trennt, und die andere (152, 252) eine Dichtung (180, 280) aufnimmt, welche die Versorgungskammer und den Außenbereich in Bezug auf die Kolbenfläche (130) trennt,
- wobei die Dichtung (180, 280) eine umlaufende Dichtung mit einem liegenden, U-förmigen Querschnitt ist, dessen einer Zweig (181) (äußerer Zweig) gegen den Boden (152a) der Nut (152, 252) und deren beide benachbarten Wände (152b, 152c) angelegt ist, wobei der andere Zweig (182) (innerer Zweig) die Dichtigkeit gewährleistet, indem er sich an dem Kolben (130) abstützt,
**dadurch gekennzeichnet, dass**
- das Ende (184) von zumindest dem äußeren Zweig (181) der Dichtung (180) eine ebene Fläche besitzt, welche dafür vorgesehen ist, an der Seite (152c) der Nut (152, 252) anzuliegen, und dass die ebene Fläche (184) um einen Winkel (α) geneigt ist, welcher zwischen 0° und 10° in Bezug auf eine Ebene senkrecht zur Achse (xx) der Bohrung (120) liegt.

6. Dichtung nach Anspruch 5,
**dadurch gekennzeichnet, dass**
das ebene Ende (184) von zumindest dem einen der Zweige (181, 182) der Dichtung (180) eine geneigte, kegelstumpfförmige Fläche in Bezug auf die axiale Richtung (xx) ist, wenn die Dichtung sich in neutraler Position befindet und in der Nut (152) ruht.

7. Dichtung nach Anspruch 5,
**dadurch gekennzeichnet, dass**
das Ende von zumindest dem einen der Zweige (281, 282) der Dichtung (280) von vorspringenden Abschnitten (285) gebildet wird, welche über den Umfang verteilt sind und jeweils eine ebene oder quasi-ebene Fläche (284) besitzen.

## Claims

1. Motor vehicle braking system master cylinder (100) having a body (110) provided with a bore (120) housing at least one piston (130, 230) actuated by the driver between a rear position of rest and a braking position and returned elastically to its position of rest,
- the bore (120) having at least one supply chamber (150, 250) linked to the brake fluid tank (190),
- the piston (130, 230) forming a drawer separating the supply chamber (150, 250) linked to the brake fluid tank (190) and a pressure chamber (140, 240) linked to the brake circuits (C1, C2),
- the supply chamber (150, 250) being edged by two grooves (151, 152; 251, 252), one receiving (151, 251) a resupply seal (153, 253) separating the supply chamber from the pressure chamber and the other (152, 252) receiving a seal (180, 280) separating the supply chamber and the outside, relative to the surface of the piston (130),
- the seal (180, 280) is a peripheral seal with a section in the form of a U on its side, of which one branch (181) (outer branch) is applied against the bottom (152a) of the groove (152, 252) and its two adjacent walls (152b, 152c), the other branch (182) (inner branch) ensuring the seal-tightness by pressing on the piston (130),
**characterized in that**
the end (184) of at least the outer branch (181) of the seal (180) has a flat surface intended to be pressed against the side (152c) of the groove (152, 252) and **in that** the flat surface (184) is inclined by an angle (α) of between 0° and 10° relative to a plane at right angles to the axis (xx) of the bore (120).

2. Master cylinder according to Claim 1,
**characterized in that**
the flat end (184) of at least one of the branches (181, 182) of the seal (180) is an inclined surface tapered relative to the axial direction (xx) when the seal is in neutral position, housed in the groove (152).

3. Master cylinder according to Claim 1,
**characterized in that**
the end of at least one of the branches (281, 282) of the seal (280) consists of protruding parts (285) distributed at the periphery and each having a flat or near-flat surface (284).

4. Master cylinder according to Claim 3,
**characterized in that**
the inclined surface (284) of the protruding parts (285) is inclined by an angle (α) of between 0° and 10° relative to a plane at right angles to the axis (xx) of the bore (120).

5. Peripheral seal with section in the form of a U on its side for a motor vehicle braking system master cylinder (10) having a body (12) provided with a bore (14) housing at least one piston (16, 18) actuated by the driver between a rear position of rest and a forward braking position and returned elastically to its position of rest,
- the bore having at least one supply chamber linked to the brake fluid tank,
- the piston (130, 230) forming a drawer separating the supply chamber (150, 250) linked to the brake fluid tank (170) and a pressure chamber (140, 240) linked to the brake circuits (C1, C2),
- the supply chamber (150, 250) being edged by two grooves (151, 152; 251, 252) one (151, 252) receiving a resupply seal (153, 253) separating the supply chamber from the pressure chamber and the other (152, 252) receiving a seal (180, 280) separating the supply chamber and the outside, relative to the surface of the piston (130),
- the seal (180, 280) is a peripheral seal with a section in the form of a U on its side, of which one branch (181) (outer branch) is pressed against the bottom (152a) of the groove (152, 252) and its two adjacent walls (152b, 152c), the other branch (182) (inner branch) ensuring the seal by pressing on the piston (130),
**characterized in that**
- the end (184) of at least the outer branch (181) of the seal (180) has a flat surface intended to be pressed against the side (152c) of the groove (152, 252) and the flat surface (184) is inclined by an angle (α) of between 0° and 10° relative to a plane at right angles to the axis (xx) of the bore (120).

6. Seal according to Claim 5,
**characterized in that**
the flat end (184) of at least one of the branches (181, 182) of the seal (180) is an inclined surface tapered relative to the axial direction (xx) when the seal is in neutral position housed in the groove (152).

7. Seal according to Claim 5,
**characterized in that**
the end of at least one of the branches (281, 282) of the seal (280) consists of protruding parts (285) distributed at the periphery and each having a flat or near-flat surface (284).
